# EUROPÄISCHE PATENTSCHRIFT

(11) **EP 1 844 598 B1**
(45) Veröffentlichungstag und Bekanntmachung des Hinweises auf die Patenterteilung: **08.08.2012**
(21) Anmeldenummer: 06700314.5
(22) Anmeldetag: 04.01.2006
(51) Int. Cl.: H04L 29/14, H04L 29/06, H04L 29/12

(54) **VERFAHREN UND VORRICHTUNG ZUR ZUORDNUNG VON PAKETADRESSEN EINER MEHRZAHL VON EINRICHTUNGEN**
METHOD AND APPARATUS FOR ASSIGNING PACKET ADDRESSES TO A PLURALITY OF DEVICES
PROCEDE ET DISPOSITIF POUR AFFECTER DES ADRESSES DE PAQUETS D'UNE PLURALITE DE DISPOSITIFS

(30) Priorität: 28.01.2005 DE 102005004151
(43) Veröffentlichungstag der Anmeldung: 17.10.2007
(73) Patentinhaber: Nokia Siemens Networks GmbH & Co. KG, 81541 München (DE)
(72) Erfinder: LÖBIG, Norbert, 64291 Darmstadt (DE); TEGELER, Jürgen, 82377 Penzberg (DE)
(86) Internationale Anmeldenummer: PCT/EP2006/050028
(87) Internationale Veröffentlichungsnummer: WO 2006/079574

(56) Entgegenhaltungen:
- WENSONG ZHANG: "Linux Virtual Server for Scalable Network Services" PAPER, [Online] 2000, Seiten 1-10, XP002372188 Ottawa Linux Symposium 2000 Gefunden im Internet: URL:http://www.linuxvirtualserver.org/ols/ lvs.pdf> [gefunden am 2006-03-15]
- STEVENS W R ED - STEVENS ET AL: "TCP/IP Illustrated, ARP: ADDRESS RESOLUTION PROTOCOL" TCP/IP ILLUSTRATED. VOL. 1 : THE PROTOCOLS, PROFESSIONAL COMPUTING SERIES, READING, MA : ADDISON WESLEY, US, Bd. VOL. 1, 1994, Seiten 53-68, XP002247360 ISBN: 0-201-63346-9
- FAN C C ET AL: "The raincore distributed session service for networking elements" PARALLEL AND DISTRIBUTED PROCESSING SYMPOSIUM., PROCEEDINGS 15TH INTERNATIONAL SAN FRANCISCO, CA, USA 23-27 APRIL 2001, LOS ALAMITOS, CA, USA,IEEE COMPUT. SOC, US, 23. April 2001 (2001-04-23), Seiten 1673-1681, XP010544581 ISBN: 0-7695-0990-8
- BRUSCHI D ET AL: "S-ARP: a secure address resolution protocol", COMPUTER SECURITY APPLICATIONS CONFERENCE, 2003. PROCEEDINGS. 19TH ANN UAL 8-12 DEC. 2003, PISCATAWAY, NJ, USA,IEEE LNKD- DOI:10.1109/CSAC.2003.1254311, 8 December 2003 (2003-12-08), pages 66-74, XP010673780, ISBN: 978-0-7695-2041-4

## Beschreibung

In zuverlässigen Rechnersystemen, wie sie in Kommunikationssystemen eingesetzt sind, werden beim Stand der Technik redundante Ressourcen bereitgehalten. Diese können beispielsweise als Rechnerkapazität, Speicher- oder Ein-/Ausgabe-Kapazitäten ausgebildet sein, wobei die Ressource von einer Plattform oder Einrichtung bereitgestellt wird. Beim Ausfall einer Einrichtung übernimmt eine redundante Einrichtung unmittelbar die Aufgaben der ausgefallenen Einrichtung, so dass von außen gesehen Funktion und Verfügbarkeit nur minimal beeinträchtigt sind.

In der Veröffentlichung WENSONG ZHANG: "Linux Virtual Server for Scalable Network Services" PAPERr, [Online] 2000, Seiten 1-10, XP002372188 Ottawa Linux Symposium 2000, URL: http://www.linuxvirtualserver.org/ols/lvs.pdf [gefunden am 2006-03-15] werden Motivation, Entwurf und interne Implementierung eines virtuellen Linux Servers beschrieben. Das Ziel dieses virtuellen Linux Servers ist es, einen grundsätzlichen Rahmen bereitzustellen, hoch skalierbare und hoch verfügbare Netzdienste aufzubauen durch Nutzung eines großen Clusters von handelsüblichen Servern. Hierbei wird der TCP/IP Stack des Linux Kernels dahingehend erweitert, drei IP Lastverteilungstechniken zu unterstützen, welche parallele Dienste von unterschiedlichen Arten von Server Clustern als einen Dienst unter einer einzigen IP Adresse erscheinen lassen können.

In dem Buch von STEVENS W R ED - STEVENS ET AL: "TCP/IP Illustrated, ARP: ADDRESS RESOLUTION PROTOCOL" TCP/IP ILLUSTRATED. VOL. 1: THE PROTOCOLS, PROFESSIONAL COMPUTING SERIES, READING, MA: ADDISON WESLEY, US, Bd. VOL. 1, 1994, Seiten 53-68, XP002247360 ISBN: 0-201-63346-9 werden insbesondere das Address Resolution Protocol (ARP) und das Reverse Address Resolution Protocol (RARP) beschrieben.

In der Veröffentlichung BRUSCHI D ET AL: "S-ARP: a secure address resolution protocol" COMPUTER SECURITY APPLICATIONS CONFERENCE, 2003. PROCEEDINGS. 19TH ANN UAL 8-12 DEC. 2003, PISCATAWAY; NJ; USA; IEEE LNKD-DOI: 10.1109/CSAC.2003.1254311, 8. Dezember 2003 (2003-12-08), Seiten 66-74. XP010673780 ISBN: 978-0-7695-2041-4 wird eine sichere Version des Adressauflösungsprotokolls ARP diskutiert.

Weist eine hinsichtlich ihrer Funktion zu ersetzende ausgefallene Einrichtung paketbasierte Schnittstellen auf, über die sie in Kontakt mit anderen Einrichtungen steht, so gibt es prinzipiell zwei Möglichkeiten, die Operabilität wiederherzustellen:

Im ersten Fall hat die ersatzgeschaltete Einrichtung eine eigene Paketadresse, die von derjenigen der ausgefallenen Einrichtung verschieden ist. In diesem Fall müssen alle Kommunikationspartner explizit auf diese neue Paketadresse umgeschaltet werden.

Im zweiten Fall hat die die Funktion der ausgefallenen Einrichtung übernehmende Einrichtung die Fähigkeit, die Paketadresse der ausgefallen Einrichtung bereitzustellen. Dies hat den Vorteil, dass keine im Hinblick auf Hochverfügbarkeitsszenarien vermeidbaren Zeitverzüge und Nichterreichbarkeiten entstehen. Außerdem hat das den Vorteil geringerer Anforderungen an die Kommunikationspartner, die in diesem zweiten Falle in Ausfallszenarien nicht auf eine andere Paketadresse umschalten müssen bzw. umgeschaltet werden müssen. Voraussetzung hierfür ist aber, dass die über eine Mehrzahl von Einrichtungen ersatzschaltbare logische Paketadresse eindeutig und zuverlässig auf die ebenfalls paketbasierte physikalische Adressierung des vorgelagerten Netzes aufgelöst d. h. zugeordnet wird. Dies ist notwendig, da das Netz jede der Einrichtungen mit ihrer eigenen physikalischen HW-Adresse ansprechen muss.

Im Hinblick auf das Beispiel eines IP-basierten Paketnetzes ist die logische Paketadresse als IP-Adresse und die physikalische Adresse als weltweit eindeutige MAC-Adresse der beteiligten Ethernet-Schnittstelle ausgebildet. Damit die Beeinträchtigung der Funktion durch den Ausfall der aktiven Einrichtung aus Sicht des IP-Netzes und der fernen Kommunikationspartner besonders gering gehalten werden kann, wird eine sogenannte "IP-Failover" - Funktion ausgeführt. Hierbei übernimmt eine zu der ausgefallenen Einrichtung redundante Einrichtung mit deren Funktionen auch deren IP-Adresse. Dies bedeutet, dass die IP-Adresse der ausgefallenen Einrichtung auf eine funktionsfähige Einrichtung mit derselben IP-Adresse übertragen wird. Daneben kann die Einrichtung weitere IP-Adressen haben, die keine IP-Failover Adressen sind.

Die IP-Failover Funktion kann so realisiert sein, dass die übernehmende Einrichtung zu den IP-Adressen, die sie übernimmt, jeweils eine Nachricht zur Adressauflösung (gratuitous ARP) auf ihr lokales Netz (LAN) absetzt und damit de facto eine Broadcast-Nachricht in das sie umgebende Netz sendet. Alle empfangenden Einrichtungen aktualisieren daraufhin ihre Adresslisten (ARP caches), indem sie in ihre Caches befindlichen IP-Adressen hinsichtlich der empfangenen Adressauflösungen (logische IP-Adresse zu physikalischer MAC Adresse am Ethernet) überprüfen, gegenebenfalls die MAC-Adresse der übernehmenden Einrichtung eintragen und dabei die MAC-Adresse der ausgefallenen Einrichtung überschreiben. Dies ist die Voraussetzung dafür, dass die über IP (Internet Protokoll) mit dem Rechnersystem kommunizierenden, entfernten Partnersysteme zumindest auf Applikationsebene den Ausfall innerhalb des Rechnersystems nicht bemerken.

Für die Zeit zwischen dem Ausfall einer Einrichtung bis zur Ersatzschaltung durch die redundante Einrichtung werden insbesondere Nachrichten, die von externen Kommunikationspartnern stammen, durch den der ausgefallenen Einrichtung vorgelagerten Router nicht erfolgreich zugestellt werden können. Gleiches gilt für weitere Kommunikationspartner der Einrichtung am gleichen Netz (LAN). Spätestens mit dem Ablauf der Gültigkeitszeit der Adressauflösung wird ein Kommunikationspartner, z. B. der Router, die ausgefallene IP-Adresse erneut auflösen wollen. Hierzu generiert er eine Adressauflösungsanfrage an sein Netz (ARP request). Dies hat die Wirkung, dass alle am Netz befindlichen Einrichtungen die Anfrage erhalten, ob sie für eine vorgegebene logische Paketadresse zuständig sind und dies gegebenenfalls in der Quittung unter Angabe ihrer physikalischen MAC-Adresse am Netz offenbaren. Erfolgt dies nun in der kurzen Zeit zwischen Ausfall und Ersatzschaltung, so wird die betroffene IP-Adresse sogar aus der Adressliste des Routers herausfallen, da keine gültige Adressauflösung auf eine MAC-Adresse gefunden werden kann. Für hochzuverlässige Systeme ist es daher wichtig, den Zeitraum zwischen Fehlerbeginn und Ersatzschaltung auf ein Minimum zu begrenzen.

Leider können auch mit dieser Vorgehensweise nicht alle möglichen Ersatzschaltescenarien behandelt werden. So ist von kommerziellen Rechnerplattformen bekannt, dass diese dauerhaft auf Applikationsebene hängen bleiben können, d. h. einzelne Applikationsprozesse oder Applikationsprozeßanteile (Threads) oder gegebenenfalls sogar alle Applikationsprozesse können nicht mehr zum Ablauf gebracht werden. Dies bedeutet aber nicht, dass auf IP-Ebene die Kommunikation mit vorgelagerten Routern oder anderen Kommunikationspartnern am Netz ebenfalls unterbrochen ist, diese kann unter Umständen weiter aufrechterhalten bleiben. Die Überwachung der Rechnerplattform erkennt nun den Ausfall und schaltet inklusive IP-Failover Adressen auf eine redundant vorgehaltene Einrichtung um. Damit befinden sich aber plötzlich zwei Einrichtungen am Netz, die beide die betroffenen logischen IP-Failover Paketadressen auf Anforderung auf ihre eigene physikalische MAC-Adresse auflösen.

Damit ist es dem Zufall überlassen, ob ein vorgelagerter Router zum Zeitpunkt des Zustellens einer Nachricht gerade die ausgefallene Einrichtung oder die operable, ersatzgeschaltete Einrichtung adressiert. Wenn also der ARP Modul (Teil des IP Stack) der ausgefallenen Einrichtung noch ARP requests beantworten kann und aufgrund anderer Gegebenheiten eine Ersatzschaltung inklusive IP-Failover stattgefunden hat, kann es zu einer gravierenden andauernden Kommunikationsstörung und damit zum Funktionsverlust der Einrichtung kommen. Wenn in dieser Situation beide Einrichtungen einen ARP request für eine IP-Failover Adresse empfangen, für die eine Ersatzschaltung stattgefunden hat, beantworten ihn beide. Wenn nun die ausgefallene Einrichtung die ARP response zufällig später schickt als die operable ersatzgeschaltete Einrichtung, speichern alle Kommunikationspartner und Router des Netzes die MAC-Adresse der ausgefallenen Einrichtung als die zugehörige MAC-Adresse zur IP-Failover Adresse, wenn sie diese IP fail-over Adresse bereits aktuell auf eine MAC Adresse aufgelöst haben, also zu der genannten Einrichtung bereits Kommunikation besteht. Die IP-Nachrichten werden also weiterhin an die ausgefallene Einrichtung geschickt statt an die ersatzgeschaltete Einrichtung, die die Funktion der ausgefallenen übernehmen sollte. In einem solchen Fall ist es also nicht kontrollierbar, welche der beiden Einrichtungen die IP-Nachrichten empfängt und inwieweit sie noch bearbeitet werden. Die Gefahr, dass Fehlfunktionen oder Funktionsverlust eintreten oder eventuell sogar inkonsistente Daten entstehen, ist sehr groß.

Ein solches Szenario wird in der Fachliteratur auch als "split brain" Scenario bezeichnet und ist bei Hochverfügbarkeitsforderungen unbedingt zu vermeiden. Beim Stand der Technik ist zur Behandlung dieser Problematik eine separate Hardware Einheit vorgesehen, die die einzelnen Plattformen einer Redundanz Einheit (i.a. eines Redundanz Paares) auf IP-Ebene überwacht. Diese Hardware Einheit sorgt dafür, dass nur dann ein IP-Failover stattfindet, wenn die als ausgefallen erkannte Einrichtung oder Plattform auch keine ARP requests mehr sendet/ beantwortet. Problematisch an dieser Lösung ist, dass das entsprechende Verfahren aufwendig und vergleichsweise langsam ist (im ungünstigen Fällen im Minutenbereich).

Der Erfindung liegt die Aufgabe zugrunde, einen Weg und eine Vorrichtung aufzuzeigen, mit deren Hilfe das Auftreten und die Auswirkungen von "split brain" Scenarien minimiert werden können.

Die Erfindung wird ausgehend von den in den Oberbegriffen der Patentansprüche 1 und 10 angegebenen Merkmale durch die kennzeichnenden Merkmale gelöst.

Der Vorteil an der Erfindung ist im Adresshandling auf Applikationsebene zu sehen. Die Beurteilung, ob eine Plattform funktionsfähig ist oder durch eine IP-Failover Funktion ersatzgeschaltet werden muss, wird auf Applikationsebene von der Funktion der Fail-over Control aufgrund einer Mehrzahl von Umgebungskriterien (Umgebungsparametern) bestimmt. Ein Umgebungskriterium oder Umgebungsparameter kann die Verfügbarkeit/ Nichtverfügbarkeit der Kommunikation zur redundanten Einrichtung sein, die Möglichkeit der Kommunikation zu weiteren Einrichtungen, die die Ersatzschaltung steuern, die Zugreifbarkeit zentraler Ressourcen, die für die ordnungsgemäße Bearbeitung der Aufgaben der Einrichtung notwendig sind. Die Fail-over Control sorgt dafür, dass zu jeder Zeit die zwei redundanten Einrichtungen aus einer Mehrzahl von redundanten Einrichtungen zugeordneten Umgebungskriterien nicht zugleich auf aktiven Betrieb, d. h. Bereitstellung der IP fail-over Adressen eingestellt sein können. Erfindungsgemäß besitzt die Fail-over Control Funktionen in jeder der redundanten Einrichtungen mit IP fail-over Adressen und läuft auf Applikationsebene als Applikationsprozeß oder Teil davon, der bei jedem vom ARP Modul empfangenen ARP request befragt wird, ob eine ARP response zu schicken ist. Es erfolgt also grundsätzlich kein unbedingtes ARP response auf einer unter der Applikationsebene befindlichen Ebene. Der ARP request wird erfindungsgemäss davon abhängig gemacht, ob insbesondere ein vorgegebener Nachrichtenaustausch (Handshake) zwischen ARP Modul und Failover Control auf Applikationsebene durchgeführt werden kann.

Durch das Handshake Verfahren wird auch im Falle von nicht mehr ausgeführten Applikationen einfach, sicher und zweifelsfrei erkannt, dass keine ARP requests beantwortet werden dürfen. Damit kann eine redundante Einrichtung gemäß Steuerung der Fail-over Control die IP fail-over Adressen auch in diesem Falle übernehmen, ohne dass die ausgefallene, bzgl. der Applikationsebene nicht mehr funktionierende Einrichtung die Adressumschaltung auf einem Level unterhalb des Applikationslevels durch ungewollte ARP responses stört. Es wird also eine Abhängigkeit eingeführt zwischen einer Fail over Control (FOC) in der Anwenderschicht und dem ARP Modul auf der niedrigeren Schicht des IP-Stack. Diese stellt sicher, dass bei beliebigen Ausfallszenarien der ARP Modul logisch synchron zum Zustand der Fail over Control arbeitet und er in der Lage ist, jeweils die richtige Information (Nachrichten zur IP-Failover Adresse an diese Plattform schicken/ nicht schicken) ins Netz kommuniziert. Eine externe Überwachung der Plattform, die über die Fail over Control auf Applikationsebene hinausgeht, wie dies beim Stand der Technik der Fall ist, ist damit nicht erforderlich. Vorteilhafte Weiterbildungen der Erfindung sind in den Unteransprüchen angegeben.

So ist weiterhin vorgesehen, die Zeitfenster für unzulässigen Cache Inhalt durch freilaufende Adressauflösungsnachrichten, die zusätzlich nach ARP Request oder als Folge empfangener inkonsistenter Adressauflösungen (ARP Request /Response, Gratuitous ARP) aus der Applikationsebene ausgebracht werden, zu verkürzen.

Darüber hinaus können HW-Mechanismen zum Rücksetzen der Einrichtung in der Weise genutzt werden, dass als erste Aktion des automatischen Wiederanlaufs die paketbasierten Schnittstellen deaktiviert werden, um das Zeitfenster für mögliche Adresskonflikte nach SW-Problemen weiter zu reduzieren.

Schließlich ist ein weiterer Vorteil der Erfindung darin zu sehen, dass ein Lauschen am Netz zum Zweck der Bedieneralarmierung durchgeführt wird im Falle dauerhafter Inkonsistenz zwischen dem durch die Fail-over Control vorgegebenen Zustand einer der redundanten Einrichtungen und den im Netz ausgetauschten Adressauflösungen.

Durch Kombination aller voranstehend aufgezeigten Mechanismen wird die höchste funktionale Verfügbarkeit erreicht.

Die Erfindung wird im Folgenden anhand eines figürlich dargestellten Ausführungsbeispiels näher erläutert. Demgemäß wird die Erfindung anhand zweier Plattformen (m = 2) beschrieben, die an ein LAN angeschlossen sind.

Dabei sind unter Umgebungsparametern Zustandsgrößen des eigenen Systems oder fremder Systeme, Kommunikations- -und Protokollbeziehungen, Zugriffe auf abgesetzte Einheiten wie Datenbasen zu verstehen. Bei vorliegendem Ausführungsbeispiel soll m = 2 gelten, was aber keinerlei Einschränkung des Verfahrens hinsichtlich einer beliebigen Anzahl von Einrichtungen sein soll. Die Einrichtungen sind als (Rechner) Plattformen ausgebildet. Ferner kann im Netz ein Network Management NM vorgesehen sein.

Im fehlerfreien Betrieb sind alle m = 2 Plattformen aktiviert und alle Prozesse verfügbar. Jede der Plattformen Plf1, Plf2 hat mindestens eine paketbasierte Schnittstelle und ist in der Lage, eine Mehrzahl von Failover Adressen mit einer definierten Funktionalität zu bedienen. Die beiden Plattformen bilden folglich eine Menge redundanter Einrichtungen im Hinblick auf die genannten Failover Adressen und die für sie zu erbringende Funktionalität.

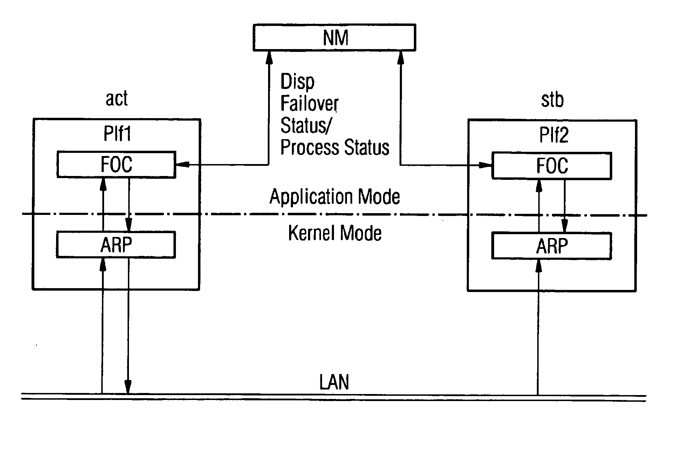

Ein Umgebungsparameter wird zu jeder Zeit für genau eine der beiden Plattformen gesetzt ist und für die restliche Plattform(en) nicht gesetzt. Gemäß vorliegendem Ausführungsbeispiel soll der Umgebungsparameter die Betriebszustände act/ standby sein. Ist der Umgebungsparameter für eine der beiden Plattformen gesetzt, so soll diese die Kommunikation über die Failover Adressen und die gewünschte Verarbeitungsfunktion bereitstellen. Ist das Umgebungskriterium für eine Plattform nicht gesetzt, soll diese die Failover Adressen nicht bereitstellen. Durch externe Steuerung werden die Umgebungsparameter in der beschriebenen Art zur Verfügung gestellt. Aus Gründen der Einfachheit wird im folgenden eine Plattform mit gesetztem Umgebungsparameter als aktiv (act) bzgl. der Fail over Adressen, eine ohne gesetzten Umgebungsparameter als standby (stb) bzgl. der Failover Adressen bezeichnet. Es ist hierbei insbesondere ausgeschlossen, dass ein Umgebungsparameter dauerhaft für mehr als eine Plattform auf aktiv gesetzt ist. Gemäß der Figur gibt es auf jeder der beiden Plattformen Plf1, Plf2 einen Applikationsprozess "Fail over Control" FOC, der eine Schnittstelle zu einem Modul ARP der Plattform aufweist und die Information besitzt, ob sich die Einrichtung bezüglich der Failover Adressen im Zustand "act" oder "stb" befindet.

Der Zustand "act" bedeutet dabei, dass die Plattform die Fail over Adressen bedient. Ein vorgelagerter Router muss Nachrichten mit diesen logischen Paketadressen zu dieser Plattform senden. Daher beantwortet der ARP Modul dieser Einrichtung die zugehörigen Adressauflösungsanforderungen (ARP requests). Der Zustand "Stb" bedeutet hingegen, dass die Plattform die Failover Adresse nicht bedient. Ein vorgelagerter Router darf Nachrichten mit diesen logischen Paketadressen nicht zu dieser Einrichtung senden. Der ARP Modul dieser Einrichtung beantwortet die zugehörigen ARP requests daher nicht.

Der ARP Modul teilt der Fail Over Control FOC mit, dass ein ARP request empfangen wurde. Ein ARP request wird nur quittiert, falls die Fail Over Control FOC einer Einrichtung dies explizit erlaubt. Damit werden ARP Requests de facto nicht über eine low level Funktion des IOP stacks oder des Betriebssystems autark beantwortet, sondern aus der Applikationsebene heraus. Ein Ausfall oder Hängenbleiben der Applikationsebene der Plattform führt folglich dazu, dass die Fail Over Control FOC dieser Einrichtung auch nicht mehr verfügbar ist, womit nachfolgend eintreffende ARP requests nicht mehr beantwortet werden. ARP requests werden dann nicht beantwortet, wenn entweder die Fail over Control FOC dies für richtig hält oder wenn die Kommunikation des ARP Moduls mit der Fail over Control gestört ist. Die Fail over Control FOC beantwortet ARP Requests insbesondere dann nicht, wenn die Einrichtung im Zustand stb ist. Ein Hängenbleiben auf Applikationsebene führt zur Abschaltung des ARP Handlings der betroffenen Einrichtung.

Durch diese innerhalb der Plattform erfolgte Verlagerung des Quittierens von ARP Requests auf die Applikationsebene, d. h. aus einem Anwenderprozess der Plattform heraus, wird vermieden, dass die ARP-Funktion noch aktiv ist, obwohl der Applikationslevel nicht mehr funktionstüchtig ist. (Letzteres könnte zum Ersatzschalten der Einrichtung dienen, also der Veränderung des Umgebungsparameters der ungestörten redundanten Einrichtung auf aktiv). Sollte es dennoch zum Split Brain Effekt kommen, so wird die Auswirkung optional durch folgende Maßnahme eingeschränkt:

Erhält eine bezüglich der Failover Adresse aktive Plattform einen ARP Request, so beantwortet sie diesen, geht aber davon aus, dass weitere Plattformen unberechtigterweise ebenfalls die IP- Failover Adresse beanspruchen könnten. Also sendet sie vorsorglich nach gewissem zeitlichem Abstand der Quittung auf den ARP Request mindestens ein Gratuitous ARP zur Auflösung der Absenderadresse sicherheitshalber hinterher. Dies erfolgt auf Initiative der Fail over Control aus der Applikationsebene der Einrichtung heraus. Damit kann ein fälschlich bestehender ARP Cache Inhalt eines Kommunikationspartners am Netz oder eines vorgelagerten Routers schnell korrigiert werden, so dass die Zeitfenster, in denen wegen des Split brain Effektes unrichtige Cache Inhalte vorhanden sein können, extrem verkürzt werden.

Bleiben ARP Requests aus, so wird gratuitious ARP vorsorglich zyklisch in gewissem Mindestabstand generiert. Dies erfolgt ebenfalls auf Initiative der Fail over Control aus der Applkationsebene der Einrichtung heraus. Auch für diesen Fall ist eine Schnittstelle zwischen Fail Over Control FOC auf Applikationslevel und dem ARP Modul erforderlich. Jeder ARP Request wird notifiziert und führt zusätzlich oder alternativ zum aus dem Applikationslevel angereiztem eventuell mehrfach ausgebrachten Gratuitous ARP.

Eine derartige Vorgehensweise ist immer dann vorteilhaft, wenn die Umgebungsparameter durch unterschiedliche Laufzeiten in den beteiligten Plattformen kurzzeitig inkonsistent sein können. Ist also z. B. im Rahmen einer routinemäßigen oder manuellen Umschaltung die aktivierte Plattform bereits aktiv, wohingegen die zu deaktivierende Plattform noch nicht deaktiviert wurde, und kommt es in diesem Zeitfenster zu einem ARP Request eines vorgeschalteten Routers, so antworten beide. Bei symmetrischer Implementierung werden beide dann auch ein zeitverzögertes Gratuitous ARP nachsetzen wollen. Durch den Zeitversatz wird die Änderung des Umgebungskriteriums die abzuschaltende Plattform mit hoher Wahrscheinlichkeit vor dem Ausbringen des zusätzlichen Gratuitous ARPs erreichen, so dass dies seitens der abzuschaltenden Plattform unterbleibt, und die u. U. inkorrekte Adressauflösung von der aktivierten Plattform korrigiert wird.

Optional kann zusätzlich zu dieser Vorgehensweise eine HW-Überwachung der Plattform auf der Applikationsebene erfolgen. Dies hat zur Folge, dass ein Hängenbleiben der Plattform oder der Fail-over Control dieser Plattform wegen SW-Defekt oder Überlastung schnell erkannt werden kann und zu dem durch HW-Mechanismen bewirkten Wiederanlauf der Plattform oder von Teilen der Plattform führt, im Rahmen dessen ggf. auch die paketbasierten Schnittstellen als erste Aktion deaktiviert bzw. zurückgesetzt werden. Mit dem Anlauf einer ehemals für eine Paketadresse aktiven Plattform werden sich die Umgebungsparameter derart verändern, dass eine der weiteren vorgesehenen Plattformen deren Funktionen übernimmt und so lückenlose Verfügbarkeit der von der Plattform gebotenen Funktionalität gewährleistet. Die HW-Überwachung setzt das Vorhandensein entsprechender HW-Funktionen voraus.

In einer weiteren Ausgestaltung der Erfindung ist vorgesehen, dass eine Plattform ihre IP-Failover Adressen deaktiviert, falls sie den dauerhaften Verlust der Zugreifbarkeit der Umgebungsparameter feststellt. Sie geht in diesem Falle davon aus, dass hiermit die Umgebungsparameter einer weiteren Plattformen derart eingestellt werden, dass diese fortan die genannten IP fail-over Adressen bedienen wird und damit keine eigene Interaktion bzgl. dieser Failover Adressen zu ungewollten Störungen und Fehlfunktionen führen würde. Die Ressourcenverfügbarkeit (z. B. interne Ressourcen für Verarbeitung oder die ungestörte Kommunikation mit weiteren externen Verarbeitungsinstanzen) gehen in den Umgebungsparameter mit ein.

Befinden sich Plattformen zur alternativen Bedienung einer Failover Adresse am gleichen Netz, so kann jede Plattform durch Lauschen am Netz die Quittungen auf ARP-Requests und die Gratuitous ARPs weiterer Plattformen vom ARP Modul in die Fail over Control FOC übertragen bekommen. Die Fail over Control instruiert hierzu den ARP Modul, alle ARP Responses, die ja nicht als Broadcast Nachrichten gesendet werden, und alle ARP Requests und gratuitous ARPs die im Broadcast Mode verschickt werden und zur Adressauflösung herangezogen werden der Fail Over Control dann zuzustellen, wenn die von der Fail Over Control bedienten IP-Failover Adressen hierbei eine andere als die Auflösung auf die eigene MAC-Adresse erfahren.

Hiermit kann die Fail over Control optional die Konsistenz der Inhalte mit dem eigenen Umgebungsparameter überprüfen. Dies bedeutet, dass auf diesem Wege festgestellt werden kann, welche weitere Plattform sich zu einer Zeit für die Failover Adresse zuständig fühlt. Die bezüglich der Adresse aktive Plattform kann die physikalische Adresse einer unberechtigt zugreifenden weiteren Plattform damit zum Alarmierungszwecke ausgeben und Gratuitous ARPs zur Korrektur ausbringen. Eine bezüglich der Adresse inaktive Plattform oder eine beliebige weitere Plattform am Netz kann damit die an einer split brain Situation beteiligten Plattformen erkennen und den Bediener alarmieren. Eine bezüglich der Adresse inaktive Plattform kann den eigenen Umgebungsparameter gegen die Adressauflösung im Netz auf Konsistenz prüfen und ebenfalls den Bediener alarmieren. Durch die Alarmierung und den als letztes Mittel anzusehenden Bedienereingriff wird die Zeitdauer eines möglichen Adresskonflikts weiter verkürzt und die Verfügbarkeit der zur Verfügung gestellten Funktion weiter erhöht.

## Patentansprüche

1. Verfahren zur Zuordnung von logischen Adressen zu physikalischen Adressen einer Mehrzahl von Einrichtungen für ein Umschalten zwischen wenigstens zwei redundanten Einrichtungen der Mehrzahl der Einrichtungen, die miteinander in Wirkverbindung stehen und die jeweils einen auf einer unter der Applikationsebene befindlichen Ebene arbeitenden Modul (ARP) aufweisen, mit dessen Hilfe eine Zuordnung der logischen zu den physikalischen Adressen von Kommunikationspartnern vorgenommen wird, indem von dem auf einer unter der Applikationsebene befindlichen Ebene arbeitenden Modul (ARP) eine Anfragenachricht ARP Request eines Kommunikationspartners empfangen und von einer der Einrichtungen mit ihrer physikalischen Adresse mit ARP Response quittiert wird,
**dadurch gekennzeichnet,**
**dass** eine Kommunikationsbeziehung zwischen einer auf Applikationsebene arbeitenden Umschaltesteuerfunktion (FOC) und dem auf einer unter der Applikationsebene befindlichen Ebene arbeitenden Modul (ARP) bereitgestellt wird,
wobei der auf einer unter der Applikationsebene befindlichen Ebene arbeitende Modul (ARP) der auf Applikationsebene arbeitenden Umschaltesteuerfunktion (FOC) über die Kommunikationsbeziehung mitteilt, dass die Anfragenachricht ARP Request empfangen wurde,
wobei die Anfragenachricht ARP Request nur mit der physikalischen Adresse quittiert wird, falls die auf Applikationsebene arbeitende Umschaltesteuerfunktion (FOC) dies erlaubt, und
wobei die auf Applikationsebene arbeitende Umschaltesteuerfunktion (FOC) einer Einrichtung zur Entscheidung, ob eine Anfragenachricht ARP Request beantwortet wird, einen oder eine Mehrzahl von Umgebungsparametern heranzieht.

2. Verfahren nach Anspruch 1,
**dadurch gekennzeichnet,**
**dass** nach einem vorgegebenen zeitlichen Abstand, nachdem die korrekte physikalische Adresse mit ARP Response über die Applikationsebene quittiert wurde, erneut mindestens eine auf Applikationsebene durch die auf Applikationsebene arbeitende Umschaltesteuerfunktion (FOC) initiierte Nachricht zur Zuordnung der physikalischen Adresse zu den logischen Adressen mit Gratuitous ARP freilaufend über den auf einer unter der Applikationsebene befindlichen Ebene arbeitenden Modul (ARP) an alle Kommunikationspartner gesendet wird.

3. Verfahren nach Anspruch 1 oder 2,
**dadurch gekennzeichnet,**
**dass** wahlweise zusätzlich eine HW-Überwachung der Einrichtungen auf der Applikationsebene oder eine HW-Überwachung der Verfügbarkeit der Umschaltesteuerfunktion der Einrichtungen vorgesehen ist, deren Ansprechen zu Maßnahmen des Wiederanlaufs der nichtverfügbaren Teile der Einrichtung führt.

4. Verfahren nach einem der vorstehenden Ansprüche,
**dadurch gekennzeichnet,**
**dass** die logischen Adressen wenigstens einer der Einrichtungen deaktiviert werden, falls ein dauerhafter Verlust der Zugreifbarkeit der Umgebungsparameter festgestellt wird.

5. Verfahren nach einem der vorstehenden Ansprüche,
**dadurch gekennzeichnet,**
**dass** einer der Umgebungsparameter zu jeder Zeit für genau eine der wenigstens zwei redundanten Einrichtungen gesetzt ist und für die restlichen Einrichtungen der wenigstens zwei redundanten Einrichtungen nicht gesetzt ist,
wobei, wenn der eine der Umgebungsparameter für die eine der wenigstens zwei Einrichtungen gesetzt ist, die eine der wenigstens zwei redundanten Einrichtungen eine Kommunkation über Failover Adressen und eine Verarbeitungsfunktion bereitstellt und die restlichen Einrichtungen der wenigstens zwei redundanten Einrichtungen die Kommunikation über die Failover Adressen nicht bereitstellen.

6. Verfahren nach Anspruch 5,
**dadurch gekennzeichnet,**
**dass** der eine der Umgebungsparameter durch eine externe Steuerung zur Verfügung gestellt wird.

7. Verfahren nach einem der vorstehenden Ansprüche,
**dadurch gekennzeichnet,**
**dass** eine der Einrichtungen zur alternativen Bedienung einer logischen Adresse durch Lauschen am Netz die Nachrichten ARP Response, Gratuitous ARP zur Zuordnung von logischen und physikalischen Adressen der weiteren Einrichtungen in die auf Applikationsebene arbeitende Umschaltesteuervorrichtung (FOC) übertragen bekommt.

8. Verfahren nach einem der vorstehenden Ansprüche,
**dadurch gekennzeichnet,**
**dass** empfangene Adresszuordnungen gegen die Umgebungsparameter plausibilisiert werden und eine Alarmierung des Bedieners über eine Network Management Funktion unter Ausgabe von Fehlerindizien erfolgt.

9. Verfahren nach einem der vorstehenden Ansprüche,
**dadurch gekennzeichnet,**
**dass** die logische Adresse als IP-Failover Adresse ausgebildet ist.

10. Verfahren nach einem der vorstehenden Ansprüche,
**dadurch gekennzeichnet,**
**dass** die physikalische Adresse als MAC-Adresse ausgebildet ist.

11. Verfahren nach einem der vorstehenden Ansprüche,
**dadurch gekennzeichnet,**
**dass** ein Umgebungsparameter die Verfügbarkeit/Nichtverfügbarkeit einer Kommunikation zu einer redundanten Einrichtung der Mehrzahl der Einrichtungen ist, oder
**dass** ein Umgebungsparameter die Möglichkeit der Kommunikation zu weiteren Einrichtungen ist, die die Ersatzschaltung steuern, oder
**dass** ein Umgebungsparameter die Zugreifbarkeit zentraler Ressourcen ist, die für die ordnungsgemäße Bearbeitung der Aufgaben einer der Mehrzahl der Einrichtungen notwendig sind.

12. Verfahren nach einem der vorstehenden Ansprüche,
**dadurch gekennzeichnet,**
**dass** ein Umgebungsparameter ein Betriebszustand einer der Mehrzahl der Einrichtungen ist.

13. Vorrichtung umfassend eine auf einer Applikationsebene arbeitende Umschaltesteuervorrichtung (FOC) zum Umschalten zwischen wenigstens zwei redundanten Einrichtungen, die jeweils einen auf einer unter der Applikationsebene befindlichen Ebene arbeitenden Modul (ARP) aufweisen, mit dessen Hilfe eine Zuordnung der logischen zu den physikalischen Adressen von Kommunikationspartnern vorgenommen wird, indem von dem auf einer unter der Applikationsebene befindlichen Ebene arbeitenden Modul (ARP) eine Anfragenachricht ARP Request eines Kommunikationspartners empfangen und von einer der Einrichtungen mit ihrer physikalischen Adresse mit ARP Response quittiert wird, **dadurch gekennzeichnet,**
**dass** die auf der Applikationsebene arbeitende Umschaltesteuervorrichtung (FOC) und der auf einer unter der Applikationsebene befindlichen Ebene arbeitende Modul (ARP) jeweils Mittel aufweisen, um über eine Kommunikationsbeziehung zwischen der auf Applikationsebene arbeitenden Umschaltesteuervorrichtung (FOC) und dem auf einer unter der Applikationsebene befindlichen Ebene arbeitenden Modul (ARP) zu kommunizieren,
wobei über die Kommunikationsbeziehung die Verfügbarkeit von logischen Adressen unter einer physikalischen Adresse einer Einrichtung davon abhängig gemacht wird, ob ein Nachrichtenaustausch (Handshake) zwischen der auf Applikationsebene arbeitenden Umschaltesteuervorrichtung (FOC) und dem auf einer unter der Applikationsebene befindlichen Ebene arbeitenden Modul (ARP) durchgeführt werden kann,
wobei der auf einer unter der Applikationsebene befindlichen Ebene arbeitende Modul (ARP) Mittel enthält, um der auf Applikationsebene arbeitenden Umschaltesteuerfunktion (FOC) über die Kommunikationsbeziehung mitzuteilen, dass die Anfragenachricht ARP Request empfangen wurde,
wobei die Anfragenachricht ARP Request nur mit der physikalischen Adresse quittiert wird, falls die auf Applikationsebene arbeitende Umschaltesteuerfunktion (FOC) dies erlaubt, und
wobei die auf Applikationsebene arbeitende Umschaltesteuerfunktion (FOC) einer Einrichtung zur Entscheidung, ob eine Anfragenachricht ARP Request beantwortet wird, Mittel aufweist, einen oder eine Mehrzahl von Umgebungsparametern heranzuziehen.

14. Vorrichtung nach Anspruch 13,
**dadurch gekennzeichnet,**
**dass** einer der Umgebungsparameter zu jeder Zeit für genau eine der wenigstens zwei redundanten Einrichtungen gesetzt ist und für die restlichen Einrichtungen der wenigstens zwei redundanten Einrichtungen nicht gesetzt ist,
wobei, wenn der eine der Umgebungsparameter für die eine der wenigstens zwei Einrichtungen gesetzt ist, die eine der wenigstens zwei redundanten Einrichtungen eine Kommunikation über Failover Adressen und eine Verarbeitungsfunktion bereitstellt und die restlichen Einrichtungen der wenigstens zwei redundanten Einrichtungen die Kommunikation über die Failover Adressen nicht bereitstellen, und
**dass** der eine der Umgebungsparameter durch eine externe Steuerung zur Verfügung gestellt wird.

15. Vorrichtung nach einem der Ansprüche 13 oder 14,
**dadurch gekennzeichnet,**
**dass** ein Umgebungsparameter ein Betriebszustand einer der wenigstens zwei redundanten Einrichtungen ist.

## Claims

1. Method for assigning logical addresses to physical addresses of a plurality of devices for switching between at least two redundant devices of the plurality of the devices which are actively connected to one another and which in each case have a module (ARP), operating at a level located below the application level, with the aid of which module the logical addresses are assigned to the physical addresses of communication partners in that a request message ARP Request of a communication partner is received by the module (ARP) operating at a level below the application level and is acknowledged by one of the devices with its physical address with ARP response, **characterized in that** a communication relationship between a switching control function (FOC) operating at application level and the module (ARP) operating at a level below the application level is provided, wherein the module (ARP) operating at a level below the application level informs the switching control function (FOC) operating at application level via the communication relationship that the request message ARP request has been received,
wherein the request message ARP Request is only acknowledged with the physical address, if the switching control function (FOC) operating at application level allows this, and
wherein the switching control function (FOC) of a device, the switching control function (FOC) operating at application level, utilizes one or a plurality of environmental parameters for deciding whether a request message ARP Request will be answered.

2. Method according to Claim 1, **characterized in that** after a predetermined time interval after the correct physical address has been acknowledged with ARP Response via the application level, at least one message initiated at application level by the switching control function (FOC) operating at application level is sent voluntarily to all communication partners for assigning the physical address to the logical addresses with gratuitous ARP via the module (ARP) operating at a level below the application level.

3. Method according to Claim 1 or 2, **characterized in that** optionally HW monitoring of the devices at the application level or HW monitoring of the availability of the switching control function of the devices is additionally provided, the response of which leads to measures for restarting the non-available parts of the device.

4. Method according to one of the preceding claims, **characterized in that** the logical addresses of at least one of the devices are deactivated, if a permanent loss of the accessibility of the environmental parameters is found.

5. Method according to one of the preceding claims, **characterized in that** one of the environmental parameters is set for exactly one of the at least two redundant devices at any time and is not set for the remaining devices of the at least two redundant devices, wherein, if one of the environmental parameters is set for one of the at least two devices, the one of the at least two redundant devices provides a communication via the fail-over addresses and a processing function and the remaining devices of the at least two redundant devices do not provide the communication via the fail-over addresses.

6. Method according to Claim 5, **characterized in that** one of the environmental parameters is provided by an external controller.

7. Method according to one of the preceding claims, **characterized in that** the messages ARP Response, gratuitous ARP for assigning logical and physical addresses of the further devices are transmitted into the switching control device (FOC) operating at application level for alternative serving of a logical address by listening in on the network.

8. Method according to one of the preceding claims, **characterized in that** received address assignments are verified against the environmental parameters and the operator is alerted via a Network Management function with the output of error indicators.

9. Method according to one of the preceding claims, **characterized in that** the logical address is formed as IP fail-over address.

10. Method according to one of the preceding claims, **characterized in that** the physical address is formed as MAC address.

11. Method according to one of the preceding claims, **characterized in that** one environmental parameter is the availability/non-availability of communication to a redundant device of the plurality of devices, or **in that** one environmental parameter is the possibility of communication to other devices which control the switch-over, or
**in that** one environmental parameter is the accessibility of central resources which are necessary for the correct processing of the tasks of one of the plurality of devices.

12. Method according to one of the preceding claims, **characterized in that** one environmental parameter is an operating state of one of the plurality of devices.

13. Device comprising a switching control device (FOC) operating at an application level for switching between at least two redundant devices which in each case have a module (ARP) operating at a level below the application level, with the aid of which an assignment of the logical addresses to the physical addresses of communication partners is carried out in that a request message ARP Request of a communication partner is received by the module (ARP) operating at a level below the application level and is acknowledged by one of the devices with its physical address with ARP Response, **characterized in that** the switching control device (FOC) operating at application level and the module (ARP) operating at a level below the application level in each case have means for communicating via a communication relationship between the switching control device (FOC) operating at application level and the module (ARP) operating at a level below the application level,
wherein, via the communication relationship, the availability of logical addresses under a physical address of a device is made dependent on whether a handshake can be carried out between the switching control device (FOC) operating at application level and the module (ARP) operating at a level below the application level,
wherein the module (ARP) operating at a level below the application level contains means for informing the switching control function (FOC) operating at application level via the communication relationship that the request message ARP Request has been received,
wherein the request message ARP Request is only acknowledged with the physical address if the switching control function (FOC) operating at application level allows this, and
wherein the switching control function (FOC) of a device, the switching control function (FOC) operating at application level, for the decision whether a request message ARP Request is answered, has means for utilizing one or a plurality of environmental parameters.

14. Device according to Claim 13, **characterized in that** at any time one of the environmental parameters is set for exactly one of the at least two redundant devices and is not set for the remaining devices of the at least two redundant devices, wherein, if the one of the environmental parameters is set for the one of the at least two devices, the one of the at least two redundant devices provides a communication via fail-over addresses and a processing function and the remaining devices of the at least two redundant devices do not provide the communication via the fail-over addresses, and
**in that** the one of the environmental parameters is provided by an external controller.

15. Device according to one of Claims 13 or 14, **characterized in that** one environmental parameter is an operating state of one of the at least two redundant devices.

## Revendications

1. Procédé pour associer des adresses logiques à des adresses physiques d'une pluralité de dispositifs pour une commutation entre au moins deux dispositifs redondants de la pluralité des dispositifs qui sont en liaison effective entre eux et qui comportent respectivement un module (ARP) qui fonctionne à un niveau situé en dessous du niveau d'application et à l'aide duquel est effectuée une association des adresses logiques aux adresses physiques de partenaires de communication par le fait qu'un message de requête ARP Request d'un partenaire de communication est reçu par le module (ARP) qui fonctionne à un niveau situé en dessous du niveau d'application et est confirmé par l'un des dispositifs avec son adresse physique avec ARP Response, **caractérisé en ce qu'**est mise à disposition une relation de communication entre une fonction de commande de commutation (FOC) qui tourne au niveau d'application et le module (ARP) qui fonctionne à un niveau situé en dessous du niveau d'application, le module (ARP) qui fonctionne à un niveau situé en dessous du niveau d'application communiquant à la fonction de commande de commutation (FOC) qui tourne au niveau d'application, via la relation de communication, que le message de requête ARP Request a été reçu,
le message de requête ARP Request étant confirmé uniquement avec l'adresse physique si la fonction de commande de commutation (FOC) qui tourne au niveau d'application le permet et
la fonction de commande de commutation (FOC) d'un dispositif servant à décider s'il est répondu à un message de requête ARP Request, laquelle fonction tourne au niveau d'application, faisant appel à un paramètre d'environnement ou à une pluralité de paramètres d'environnement.

2. Procédé selon la revendication 1, **caractérisé en ce que**, après une distance temporelle prédéterminée après la confirmation de l'adresse physique correcte avec ARP Response via le niveau d'application, de nouveau au moins un message initialisé au niveau d'application par la fonction de commande de commutation (FOC) qui tourne au niveau d'application est envoyé à tous les partenaires de communication pour association de l'adresse physique aux adresses logiques avec Gratuitous ARP, en marche libre, via le module (ARP) qui fonctionne à un niveau situé en dessous du niveau d'application.

3. Procédé selon la revendication 1 ou 2, **caractérisé en ce qu'**est additionnellement prévue, au choix, une surveillance HW des dispositifs au niveau d'application ou une surveillance HW de la disponibilité de la fonction de commande de commutation des dispositifs, dont la réaction entraîne des mesures de redémarrage des parties non disponibles du dispositif.

4. Procédé selon l'une des revendications précédentes, **caractérisé en ce que** les adresses logiques d'au moins l'un des dispositifs sont désactivées si une perte permanente de l'accessibilité des paramètres d'environnement est constatée.

5. Procédé selon l'une des revendications précédentes, **caractérisé en ce que** l'un des paramètres d'environnement est réglé à tout moment pour exactement l'un des au moins deux dispositifs redondants et n'est pas réglé pour les dispositifs restants des au moins deux dispositifs redondants, l'un des au moins deux dispositifs redondants, lorsque l'un des paramètres d'environnement est réglé pour l'un des au moins deux dispositifs, mettant à disposition une communication via des adresses failover et une fonction de traitement, et les dispositifs restants des au moins deux dispositifs redondants ne mettant pas la communication à disposition via les adresses failover.

6. Procédé selon la revendication 5, **caractérisé en ce que** l'un des paramètres d'environnement est mis à disposition par une commande externe.

7. Procédé selon l'une des revendications précédentes, **caractérisé en ce que** l'un des dispositifs reçoit, pour un service alternatif d'une adresse logique et par écoute du réseau, le transfert des messages ARP Response, Gratuitous ARP pour association d'adresses logiques et d'adresses physiques des autres dispositifs au dispositif de commande de commutation (FOC) qui fonctionne au niveau d'application.

8. Procédé selon l'une des revendications précédentes, **caractérisé en ce que** des associations d'adresses reçues sont rendues plausibles par rapport aux paramètres d'environnement et il se produit un avertissement de l'opérateur via une fonction de gestion de réseau avec production en sortie d'indices d'erreur.

9. Procédé selon l'une des revendications précédentes, **caractérisé en ce que** l'adresse logique se présente sous la forme d'une adresse IP failover.

10. Procédé selon l'une des revendications précédentes, **caractérisé en ce que** l'adresse physique se présente sous la forme d'une adresse MAC.

11. Procédé selon l'une des revendications précédentes, **caractérisé en ce que** :
- un paramètre d'environnement est la disponibilité / la non-disponibilité d'une communication avec un dispositif redondant de la pluralité des dispositifs ou
- un paramètre d'environnement est la disponibilité de la communication avec d'autres dispositifs qui commandent le circuit de remplacement ou
- un paramètre d'environnement est l'accessibilité de ressources centrales qui sont nécessaires pour le traitement en bonne et due forme des tâches de l'un de la pluralité des dispositifs.

12. Procédé selon l'une des revendications précédentes, **caractérisé en ce qu'**un paramètre d'environnement est un état de fonctionnement de l'un de la pluralité des dispositifs.

13. Dispositif comprenant un dispositif de commande de commutation (FOC) fonctionnant à un niveau d'application pour commuter entre au moins deux dispositifs redondants qui comportent respectivement un module (ARP) qui fonctionne à un niveau situé en dessous du niveau d'application et à l'aide duquel est effectuée une association des adresses logiques aux adresses physiques de partenaires de communication par le fait qu'un message de requête ARP Request d'un partenaire de communication est reçu par le module (ARP) qui fonctionne à un niveau situé en dessous du niveau d'application et est confirmé par l'un des dispositifs avec son adresse physique avec ARP Response, **caractérisé en ce que** le dispositif de commande de commutation (FOC) qui fonctionne au niveau d'application et le module (ARP) qui fonctionne à un niveau situé en dessous du niveau d'application comportent des moyens pour communiquer via une relation de communication entre le dispositif de commande de commutation (FOC) qui fonctionne au niveau d'application et le module (ARP) qui fonctionne à un niveau situé en dessous du niveau d'application,
la disponibilité d'adresses logiques sous une adresse physique d'un dispositif étant, via la relation de communication, subordonnée à la possibilité d'exécuter un échange de messages (handshake) entre le dispositif de commande de commutation (FOC) qui fonctionne au niveau d'application et le module (ARP) qui fonctionne à un niveau situé en dessous du niveau d'application,
le module (ARP) qui fonctionne à un niveau situé en dessous du niveau d'application contenant des moyens pour communiquer à la fonction de commande de commutation (FOC) qui tourne au niveau d'application, via la relation de communication, que le message de requête ARP Request a été reçu,
le message de requête ARP Request étant confirmé uniquement avec l'adresse physique si la fonction de commande de commutation (FOC) qui tourne au niveau d'application le permet, et
la fonction de commande de commutation (FOC) d'un dispositif servant à décider s'il est répondu à un message de requête ARP Request, laquelle fonction tourne au niveau d'application, comportant des moyens pour faire appel à un paramètre d'environnement ou à une pluralité de paramètres d'environnement.

14. Dispositif selon la revendication 12, **caractérisé en ce que** la fonction de commande de commutation (FOC) d'un dispositif qui tourne au niveau d'application comporte, pour prendre la décision s'il faut répondre à un message de requête ARP Request, des moyens pour faire appel à un ou à plusieurs paramètres d'environnement.

15. Dispositif selon l'une des revendications 13 ou 14, **caractérisé en ce qu'**un paramètre d'environnement est un état de fonctionnement de l'un des au moins deux dispositifs redondants.
